# EUROPÄISCHE PATENTSCHRIFT

(11) **EP 3 409 994 B1**
(45) Veröffentlichungstag und Bekanntmachung des Hinweises auf die Patenterteilung: **14.09.2022**
(21) Anmeldenummer: 17174309.9
(22) Anmeldetag: 02.06.2017
(51) Int. Cl.: F16L 55/027, F24F 13/14, F24F 13/02, F24F 13/04

(54) **ROHREINSATZ UND SYSTEM MIT ROHREINSATZ**
PIPE INSERT AND SYSTEM WITH PIPE INSERT
INSERT TUBULAIRE ET SYSTÈME COMPRENANT UN INSERT TUBULAIRE

(43) Veröffentlichungstag der Anmeldung: 05.12.2018
(73) Patentinhaber: Zehnder Group International AG, 5722 Gränichen (CH)
(72) Erfinder: Schouwstra, Wout, 7944 LN Meppel (NL)
(74) Vertreter: Rentsch Partner AG

(56) Entgegenhaltungen:
- EP-A1- 0 387 473
- EP-A1- 2 508 815
- DE-U1-202013 100 986
- DE-U1-202017 101 295
- FR-A1- 2 668 577
- US-A- 3 654 965

## Beschreibung

Die Erfindung betrifft einen Rohreinsatz zur Anordnung in einem Rohr für die Einstellung des Volumenstroms eines innerhalb des Rohrs geführten Fluids. Die Erfindung betrifft ferner ein System zur Zuführung oder Abführung eines Fluids, vorzugsweise zur Belüftung eines Raumes aufweisend einen erfindungsgemäßen Rohreinsatz.

In der Belüftungs- und Klimatechnik ist es bekannt, den zu belüftenden Räumen die Luft über eine Rohrleitung zuzuführen. Die Rohrleitungen sind dabei ausgangsseitig in der Regel verblendet, um einerseits die Ästhetik des Raumes nicht zu stören und andererseits das Eindringen von Fremdkörpern in die Rohre zu verhindern. In dieser Ausgestaltung können feine Partikel, wie insbesondere Staub, gleichwohl in die Rohrleitungen eindringen, wenn die Lüftung nicht in Betrieb ist.

Es sind daher ebenfalls Systeme bekannt, die anstatt einer bloßen Blende rohrausgangsseitig ein Ventil aufweisen, dass in Abhängigkeit eines im Rohrsystem vorliegenden Betriebsdrucks öffnet und schließt.

Es ist nun so, dass unterschiedliche Belüftungssysteme mit unterschiedlichem Betriebsdruck arbeiten. Dies ergibt sich aus den individuellen Eigenschaften des zu belüftenden Raumes bzw. des Gebäudes an die die jeweiligen Systeme angepasst sind. Die ordnungsgemäße Funktion eines Belüftungssystems ist jedoch abhängig vom effektiven Volumenstrom des Belüftungsmediums. Ist der Volumenstrom zu gering wird keine ausreichende Belüftungswirkung erreicht. Ist demgegenüber der Volumenstrom zu hoch, wird er bestenfalls als unangenehm empfunden und kann schlimmstenfalls zur Beschädigung von Gegenständen innerhalb des Raumes führen.

Es sind daher bekannt, Belüftungssysteme mit regelbaren Ventilen, insbesondere regelbaren Drosselventilen auszurüsten, um bei verschiedenen Betriebsdrücken für einen gleichmäßigen Volumenstrom zu sorgen. Diese Regelsysteme erfordern zumindest ein Ventil mit einstellbaren Drosselelementen. Wodurch diese Art von Ventil aufwendig herzustellen und darüber hinaus anfällig für Beschädigungen ist.

Ein weiteres Problem ergibt sich daraus, dass das im Rohrsystem geführte Fluid einem turbulenten Strömungsmuster folgt. Die Ventile müssen daher ferner darauf ausgelegt sein, bei unvorhersehbaren Anströmungsverhältnissen zu funktionieren, was zu der ohnehin schon erforderlichen komplexen Konstruktion des Ventils weitere notwendige Teile hinzufügt.

Hierdurch werden Herstellungsaufwand und Fehleranfälligkeit in nachteiliger Weise verstärkt.

Das Dokument DE 20 2013 100986 U1 offenbart eine Luftverteileinrichtung für eine Belüftungsanlage eines Gebäudes, mit einem Gehäuse, das Doppelanschlüsse für die strömungstechnische Anbindung jeweils eines Luftführungskanals und/oder -rohrs aufweist, wobei Verschlussstopfen zum Einsatz kommen, die dem luftdichten Verschluss eines Anschlusses dienen.

Es ist daher die **Aufgabe** der Erfindung, eine Einstellung des Volumenstroms in Abhängigkeit des Betriebsdrucks in einem System zur Zuführung oder Abführung eines Fluids mit einfachen Mitteln zu ermöglichen.

Zur Lösung der **Aufgabe** schlägt die Erfindung einen Rohreinsatz zur Anordnung in einem Rohr für die Einstellung des Volumenstroms eines innerhalb des Rohrs geführten Fluids gemäß Anspruch 1 vor.

Der Rohreinsatz weist dabei einen Grundkörper und wenigstens ein Verschlusselement auf, wobei der Grundkörper wenigstens einen Verbindungskanal aufweist und wobei das Verschlusselement in den Verbindungskanal einsetzbar ist.

In vollständiger Abkehr vom Stand der Technik ist die Einstellung des Volumenstroms bei einem bestimmten Betriebsdruck in einem Rohr nicht länger abhängig von der Ausgestaltung eines wie auch immer gearteten Ventils. Vielmehr ist mit bestimmungsgemäßer Anordnung des erfindungsgemäßen Rohreinsatzes in einem Rohr eines Belüftungssystems ein Betrieb auch ohne die Vorsehung eines Ventils dem Grunde nach möglich. Die Einstellung des Volumenstroms erfolgt durch das Zusammenwirken von Grundkörper und Verschlusselement. Bei gegebenem Betriebsdruck wird durch das Einsetzen des Verschlusselementes in den Verbindungskanaf des Grundkörpers die Querschnittsfläche des Rohrs, durch welche Fluid strömen kann auf das gewünschte Maß verringert. Ein weiterer Vorteil der Erfindung liegt in der Änderung der Fluidströmung über den Rohrquerschnitt. In Rohren ohne den erfindungsgemäßen Rohreinsatz liegt am Ventil eine turbulente Strömung an. Durch den kontrollierten Durchtritt des Fluids durch den erfindungsgemäßen Rohreinsatz werden die Turbulenzen vermindert und die den Rohreinsatz verlassende Fluidströmung insgesamt an ein laminares Strömungsmuster angenähert. Hierdurch wird eine etwaige Beeinträchtigung des dem Rohreinsatz nachgeschalteten Ventils durch turbulente Strömungsmuster verringert. Die vorbeschriebenen Vorteile sind bereits dann zu erreichen, wenn ein einziges Verschlusselement und ein einziger Verbindungskanal, in den das Verschlusselement einsetzbar ist, vorgesehen sind. Gleichwohl ist es bevorzugt vorgesehen, dass der Grundkörper wenigstens zwei Verbindungskanäle und nach der Erfindung eine Mehrzahl von Verbindungskanälen bereitstellt. Hierdurch kann eine feinere Abstimmung des gewünschten Volumenstroms erreicht werden. Es ist in diesem Fall ferner bevorzugt, dass der Rohreinsatz über wenigstens zwei Verschlusselemente und besonders bevorzugt über eine Mehrzahl von Verschlusselementen verfügt. Die Verschlusselemente sind dabei wahlweise in die Verbindungskanäle einsetzbar. Hierdurch kann diejenige Anzahl an Verschlusselementen in diejenige Anzahl von Verbindungskanälen eingesetzt werden, die für die Einstellung eines bestimmten Volumenstroms erforderlich sind. Vorzugsweise verfügt der Grundkörper über eine Mehrzahl *n* von Verbindungskanälen, in die Verschlusselemente eingesetzt werden können. Je größer die Zahl der Verbindungskanäle, desto genauer kann der Volumenstrom eingestellt werden. Der Rohreinsatz ist damit für einen größeren Bereich von möglichen Betriebsdrücken einsetzbar. Vorzugsweise beträgt die Anzahl der Verbindungskanäle in die tatsächlich Verschlusselemente eingesetzt sind, maximal *n*-*1*. Für den praktischen Anwendungsbereich in Ansehung der üblichen Betriebsdrücke und Rohrdurchmesser im Bereich der Belüftungssysteme haben sich mit Bezug auf die Anzahl der Verbindungskanäle, in die Verschlusselemente einsetzbar sind, Werte von 3 bis 20, bevorzugt 5 bis 15 und besonders bevorzugt 7 bis 12 als besonders vorteilhaft erwiesen. Insbesondere bei einer Anzahl an Verbindungskanälen von 7 bis 12 besteht ein besonders vorteilhaftes Verhältnis zwischen einstellbarem Volumenstrom und Herstellungsaufwand. In diesem besonderen Fall bedeutet dies, dass der erfindungsgemäße Rohreinsatz maximal 6 bis 11 Verschlusselemente aufweist.

Auch eine Nachrüstung bestehender Systeme mit dem erfindungsgemäßen Rohreinsatz ist problemlos möglich, da er rohrausgangsseitig einfach in das Rohr einsetzbar ist. Die Anpassung an den Betriebsdruck erfolgt dann durch den Einsatz des/der Verschlusselementes/e in den/die Verbindungskanal/-kanäle. Der Rohreinsatz ist im Vergleich zu den aus dem Stand der Technik bekannten regelbaren Drosselventilen einfach und kostengünstig als Massenprodukt herstellbar. Bei der Erstmontage oder der Nachrüstung wird es einmalig auf den gewünschten Volumenstrom eingeregelt, indem die hierfür erforderliche Querschnittsfläche durch Verschließen der entsprechenden Verbindungskanäle eingestellt wird. Sobald es einmal auf einen bestimmten Volumenstrom mittels der Verschlusselemente eingestellt ist, bedarf es zum bestimmungsgemäßen Einsatz keiner weiteren Modifikation mehr. Insbesondere sind keinerlei beweglichen Teile, Sensoren, elektronische Regeleinrichtungen oder dergleichen erforderlich, um den gewünschten Volumenstrom einzustellen.

Gemäß einem bevorzugten Merkmal der Erfindung verfügt der Grundkörper zusätzlich über Verbindungskanäle, in die die Verschlusselemente nicht einsetzbar sind. Zu diesem Zweck sind diese zusätzlichen Verbindungskanäle mit einem anderen Querschnitt ausgebildet, als die übrigen Verbindungskanäle, in die ein Verschlusselement einsetzbar ist. Die zusätzlichen Verbindungskanäle sind insofern mit den Verschlusselementen inkompatibel ausgebildet. Hierdurch wird in vorteilhafter Weise eine weitere Abstufung der Einstellbarkeit des Volumenstroms erreicht und eine Strömung durch den Grundkörper auch in dem Fall gewährleistet, in dem in allen Verbindungskanälen ein Verschlusselement eingesetzt ist. Gemäß einem bevorzugten Merkmal der Erfindung können Grundkörper und/oder Verschlusselement aus einem fluiddurchlässigen oder einem fluiddichten Material gebildet sein. Dabei können Grundkörper und Verschlusselemente aus dem gleichen Material oder aus unterschiedlichen Materialien gebildet sein. Dabei können auch die Verschlusselemente alle aus dem gleichen Material oder aus unterschiedlichen Materialien gebildet sein. In dem Fall, in dem sowohl Grundkörper als auch die Verschlusselemente auch einem fluiddichten Material gebildet sind, ist ein Verbindungskanal durch den Einsatz eines Verschlusselements fluiddicht verschlossen. Das im Rohr geführte Fluid kann den Rohreinsatz in diesem Beispiel ausschließlich durch die unverschlossenen Verbindungskanäle passieren. Dies ermöglicht die Reduktion des Strömungsquerschnitts des Rohrs auf den gewünschten Wert mittels der verschließbaren Verbindungskanäle, während das Rohr im Übrigen durch den Rohreinsatz fluiddicht verschlossen ist. Dies erlaubt eine besonders präzise, stufenweise Einstellung der gewünschten Volumenströme im Rohr. In dem alternativen Fall nach der Erfindung, in dem der Grundkörper und/oder die Verschlusselemente aus einem fluiddurchlässigen Material gebildet sind, erfolgt der Durchtritt des Fluids durch den Rohreinsatz nicht ausschließlich durch die unverschlossenen Verbindungskanäle, sondern auch durch den Grundkörper und/oder die Verschlusselemente selbst. Hierbei strömt Fluid über einen vergleichsweise großen Teil des Rohrquerschnitts durch den Rohreinsatz. Dadurch wird in besonders wirksamer Weise die Bildung turbulenter Strömungen verhindert und bereits anliegende turbulente Strömungen beim Austritt aus dem Rohreinsatz an eine laminare Strömung angenähert.

Vorzugsweise sind sowohl die fluiddichten Materialien als auch die fluiddurchlässigen Materialien flexibel, insbesondere elastisch. Hierdurch ist es möglich, den Rohreinsatz für Rohre mit unterschiedlichem Durchmesser bestimmungsgemäß zu verwenden. Im Stand der Technik stellt sich demgegenüber das Problem, dass die Ventile hinsichtlich ihrer Rohranschlüsse auf jeweils eine bestimmte Größe festgelegt sind, so dass bereits kleinere Abweichungen von dieser Normgröße dazu führen können, dass das vorgesehene Ventil nicht verwendet werden kann. Es ist daher erforderlich, bei der Montage des Systems stets unterschiedliche Ventilgrößen vorzuhalten. Sollte ein System Rohre verwenden, zu der es keine passende Größe gibt, muss die Montage gegebenenfalls abgebrochen werden. Insbesondere im Bereich der grenzüberschreitenden Montagetätigkeiten führt dies aufgrund unterschiedlicher Konstruktionsstandards zu starken Beeinträchtigungen. Diese Nachteile sind durch den erfindungsgemäßen Rohreinsatz mit einem Grundkörperaus einem flexiblen Material wirkungsvoll unterbunden.

Fluiddurchlässige Materialien im Sinne der Erfindung sind solche, die wenigstens teilweise porös ausgebildet sind. Der Anteil des Volumenstroms, der durch das fluiddurchlässige Material erfolgt, ist dabei über die Porosität des Materials einstellbar. In diesem Zusammenhang ist der Anteil des Volumenstroms umso höher, je größer die Porengröße und der Anteil der durchgängigen Poren an der Gesamtanzahl der Poren ist. Bevorzugte poröse und flexible Materialien im Sinne der Erfindung sind offenzellige Schaumstoffe. Offenzellige Schaumstoffe sind dabei nicht nur solche, die ausschließlich offenzellig ausgebildet sind, sondern auch solche, die zum überwiegenden Teil offenzellig ausgebildet sind. Je größer dabei der Anteil der offenen Zellen an der Gesamtanzahl der Zellen im Schaumstoff ist, desto größer ist der Volumenstrom, der bei gegebenem Druck durch den Grundkörper und/oder durch die Verschlusselemente strömt. Bevorzugt beträgt der Anteil der offenen Zellen an der Anzahl der Gesamtzellen wenigstens 60%, weiter bevorzugt wenigstens 70%, noch weiter bevorzugt wenigstens 80% und besonders bevorzugt wenigstens 90%. Auf diese Weise lässt sich der Volumenstrom im Rohr besonders genau steuern. Besonders bevorzugt ist der offenzellige Kunststoff aus einem offenzelligen Polyurethan-Schaum (PUR-Schaum) gebildet. Offenzellige PUR-Schäume sind in vorteilhafter Wiese vergleichsweise einfach herzustellen, weisen die notwendige Porosität auf und sind besonders verschleißresistent.

Fluiddichte, flexible Materialien im Sinne der Erfindung sind demgegenüber geschlossenzellige Schaumstoffe. Besonders bevorzugt sind dabei geschlossenzellige PUR-Schäume. Geschlossenzellige PUR-Schäume weisen in vorteilhafter Weise einerseits die gewünschte Flexibilität und andererseits die notwendige Fluiddichtigkeit auf. Darüber hinaus sind sie besonders verschleißresistent. Erfindungsgemäß ist der Grundkörper nicht auf eine bestimmte Querschnittsgeometrie festgelegt. Er kann in Entsprechung des Querschnitts des Rohr, in welches er eingesetzt werden soll ausgebildet sein. Möglich ist dabei insbesondere eine eckige oder runde Querschnittsgeometrie. Dies ermöglicht den Einsatz in Rohren mit eckigem oder rundem Querschnitt. Vorzugsweise ist der Grundkörper mit kreisförmigem Querschnitt ausgebildet. In synergetischer Verbindung mit der Ausbildung des Grundkörpers aus einem flexiblen Material ist der Rohreinsatz hinsichtlich seiner Verwendung auch bei kreisförmiger Ausgestaltung nicht auf die ausschließliche Verwendung in einem kreisförmigen Rohr festgelegt. Vielmehr kann sich der Grundkörper aufgrund seiner flexiblen Ausgestaltung auch an sonstige ovale Rohrquerschnitte anpassen. Dies ist im Stand der Technik aufgrund der verwendeten Ventile selbstverständlich nicht möglich. Vorzugsweise ist der Grundkörper im Falle der kreisförmigen Ausgestaltung im Querschnitt mit einem Durchmesser von 50 bis 200 mm, vorzugsweise 70 bis 150 mm, besonders bevorzugt 80 bis 140 mm ausgebildet. Hierdurch ist es dem Grundkörper möglich, sich an gängige Rohrdurchmesser in vorteilhafter Weise anzupassen.

Gemäß einem bevorzugten Merkmal der Erfindung sind auch die Verbindungskanäle im Querschnitt entweder eckig oder rund ausgebildet. Beide Querschnitte sind dem Grunde nach dafür geeignet von dem im Rohr geführten Fluid durchströmt zu werden. Es hat sich jedoch gezeigt, dass Verbindungskanäle mit rundem Querschnitt Vorteile im Strömungsverhalten zeigen. Als besonders vorteilhaft haben sich solche Querschnitte erwiesen, die kreisförmig oder ringförmig sind. Im Sinne der Erfindung sind hiermit auch Querschnitte erfasst, die in Form eines Kreissegments oder eines Ringsegments ausgebildet sind.

Gemäß einem bevorzugten Merkmal der Erfindung sind die Verschlusselemente mit einem solchem solchen Querschnitt ausgebildet, der wenigstens teilweise mit dem Querschnitt eines Verbindungskanals korrespondiert. Hierdurch wird sichergestellt, dass das jeweilige Verschlusselement in den jeweiligen Verbindungskanal durch einfaches Einstecken eingesetzt werden kann. Ein Verschlusselement kann vorzugsweise als Formkörper ausgebildet sein. Es ist bevorzugt vorgesehen, dass das Verschlusselement einendseitig korrespondierend mit dem Querschnitt eines Verbindungskanals und andernendseitig korrespondierend mit dem Querschnitt eines anderen Verbindungskanals ausgebildet ist. Hierdurch kann ein einziges Verschlusselement zum Verschluss verschieden ausgebildeter Verbindungskanäle verwendet werden. Besonders bevorzugt kann es vorgesehen sein, das Verschlusselement einendseitig mit kreisförmigem Querschnitt und andernendseitig mit quadratischem oder elliptischem Querschnitt auszubilden. Ebenso ist es möglich, dass Verschlusselement nur mit einer einzigen Querschnittsgeometrie auszubilden. Vorzugsweise mit kreisförmigem oder ringförmigem Querschnitt. Im Sinne der Erfindung sind hiermit auch Querschnitte erfasst, die in Form eines Kreissegments oder eines Ringsegments ausgebildet sind.

Gemäß einem bevorzugten Merkmal der Erfindung ist der Grundkörper modular aufgebaut. Er besteht dabei aus wenigstens zwei Modulen. Die Module sind vorzugsweise mittels Steckverbindung aneinander befestigbar. Dabei sind die Module derart zueinander angeordnet, dass sie zur Ausbildung der Steckverbindung teilweise in Kontakt miteinander stehen. Ferner sind sie derart zueinander Angeordnet, dass sie teilweise voneinander beabstandet sind. Zwischen den Abschnitten die untereinander in Kontakt stehen und den Abschnitten die voneinander benachbart sind, sind ein Teil der Verbindungskanäle ausgebildet. Wenigstens ein Modul weist dabei Verbindungsmittel auf. Die Verbindungsmittel sind vorzugsweise im Querschnitt als Steg ausgebildet, der das eine Modul mit dem anderen Modul verbindet. Gleichzeitig weist bildet das Verbindungsmittel dabei eine Seitenwand eines Verbindungskanals. Vorzugsweise sind die Module nach Art eines Hohlzylinders ausgebildet. Sie weisen dabei einen ringförmigen Querschnitt auf. Eines der Module ist dabei vorzugsweise mit geringerem Durchmesser ausgebildet als das andere Modul. Das Modul mit dem geringeren Durchmesser stellt vorzugsweise die Verbindungsmittel bereit. Die modulare Ausgestaltung des Grundkörpers bringt große fertigungstechnische Vorteile, da die einzelnen Module aufgrund ihres einfachen Aufbaus wesentlich leichter hergestellt werden können, als der Grundkörper insgesamt.

Gemäß einer besonders bevorzugten Ausgestaltung der Erfindung weist der modular aufgebaute Grundkörper ein Stabilisierungselement auf. Das Stabilisierungselement ist vorzugsweise quaderförmig ausgebildet. Es dient einerseits der mechanischen Stützung des Moduls mit dem geringeren Durchmesser. Zu diesem Zweck ist es derart im Inneren des hohlzylindrischen Moduls angeordnet, dass es in Kontakt mit den Innenwänden des Moduls steht. Ferner ist es derart angeordnet, dass es den Innenraum des Moduls in zwei Verbindungskanäle mit jeweils halbkreisförmigem Querschnitt unterteilt. Alternativ kann das Stabilisierungselement im Querschnitt kreuzförmig ausgebildet sein. Dabei steht jeder der zwei Kreuzbalken beidendseitig in Kontakt mit der Innenwand des Moduls mit geringerem Durchmesser. Dabei teilt es den Innenraum des Moduls in vier Verbindungskanäle mit jeweils viertelkreisförmigem Querschnitt. Vorstellbar sind ferner Stabilisierungselemente mit sternförmigem Querschnitt. Vorteilhafterweise kann der Grundkörper durch das Stabilisierungselement einerseits mechanisch verstärkt werden und andererseits in synergetischer Weise um zusätzliche Verbindungskanäle ergänzt werden, die eine feinere Abstufung des einstellbaren Volumenstroms erlauben.

Zur **Lösung** der Aufgabe schlägt die Erfindung ferner ein System zur Zuführung oder Abführung eines Fluids, vorzugsweise zur Belüftung eines Raumes, vor, aufweisend ein Rohr und einen innerhalb des Rohres angeordneten Rohreinsatz gemäß der Erfindung.

In vollständiger Abkehr vom Stand der Technik ist die Einstellung des Volumenstroms bei einem bestimmten Betriebsdruck in dem Rohr damit nicht länger abhängig von der Ausgestaltung eines wie auch immer gearteten Ventils. Vielmehr ist mit bestimmungsgemäßer Anordnung des erfindungsgemäßen Rohreinsatzes in einem Rohr eines Belüftungssystems ein Betrieb auch ohne die Vorsehung eines Ventils dem Grunde nach möglich. Die Einstellung des Volumenstroms erfolgt durch den Einsatz einer oder mehrerer Verschlusselemente in einen oder mehrere Strömungskanäle des Grundkörpers.

Bei gegebenem Betriebsdruck wird durch diese einfache Maßnahme die Querschnittsfläche des Rohrs, durch welche Fluid strömen kann auf das gewünschte Maß verringert.. Auch eine Nachrüstung bestehender Systeme mit dem erfindungsgemäßen Rohreinsatz ist problemlos möglich, da es rohrausgangsseitig einfach in das Rohr einsetzbar ist. Die Anpassung an den Betriebsdruck erfolgt dann durch den Einsatz der Verschlusselemente in eine bestimmte Anzahl von Verbindungskanälen des Grundkörpers. Der Rohreinsatz ist im Vergleich zu den aus dem Stand der Technik bekannten regelbaren Drosselventilen einfach und kostengünstig als Massenprodukt herstellbar. Bei der Erstmontage oder der Nachrüstung wird es einmalig auf den gewünschten Volumenstrom eingeregelt, indem die hierfür erforderliche Querschnittsfläche eingestellt wird. Sobald der Rohreinsatz einmal auf einen bestimmten Volumenstrom mittels der Verschlusselemente eingestellt ist, bedarf es zum bestimmungsgemäßen Einsatz keiner weiteren Modifikation mehr. Insbesondere sind keinerlei beweglichen Teile, Sensoren, elektronische Regeleinrichtungen oder dergleichen erforderlich, um den gewünschten Volumenstrom einzustellen.

Obwohl das erfindungsgemäße System ohne Ventil bestimmungsgemäß verwendbar ist, ist gemäß einer bevorzugten Ausgestaltung der Erfindung ein Ventil vorgesehen, welches endseitig des Rohrs angeordnet ist. In vorteilhafter Weise ist das System damit gegenüber einem Eindringen von Fremdkörper und Staub geschützt, wenn das System nicht in Betrieb ist. Das erfindungsgemäße System ist mit der Mehrzahl von aus dem Stand der Technik bekannten Ventilen kompatibel. Insbesondere ist jedoch die Verwendung eines Tellerventils vorgesehen. Der Teller des Ventils ist dabei entgegen der Ausströmrichtung des Rohrs federbelastet. Die Federbelastung kann dabei auf den minimalen Betriebsdruck des Systems einstellbar sein. Vorzugsweise handelt es sich dabei im Unterschied zum Stand der Technik um ein einfaches, nicht-regelbares Tellerventil, da es durch den erfindungsgemäßen Rohreinsatz nicht notwendig ist, dass das Ventil den Volumenstrom regelt.

Die Verwendung einfacher Tellerventile ist aufgrund der im Rohr herrschenden turbulenten Strömung nicht ohne Nachteil. In Abhängigkeit der Strömungsbedingungen im Rohr kann die Schaltung des Ventils fehlerbehaftet ist, wodurch die Qualität der Belüftungsanlage beeinträchtigt werden kann. Es ist deshalb gemäß einem bevorzugten Merkmal der Erfindung vorgesehen, dass der Rohreinsatz im Bereich desjenigen Rohrendes angeordnet ist an dem auch das Ventil angeordnet ist. Durch die Kombination mit dem erfindungsgemäßen Rohreinsatz können die Strömungseigenschaften des Fluids in synergetischer Weise durch die definierte Anzahl an Verbindungskanälen sowie deren Anordnung gezielt an die Erfordernisse des Tellerventils angepasst werden.

Gemäß einem bevorzugten Merkmal der Erfindung ist der Volumenstrom des Fluids mittels des Rohreinsatzes in Abhängigkeit eines Betriebsdrucks des Fluids im System stufenweise einstellbar. Dies wird durch den Verschluss der Verbindungskanäle des Rohreinsatzes ermöglicht. Im Vergleich mit den aus dem Stand der Technik bekannten komplexen Regelsystemen ermöglicht das erfindungsgemäße System eine ausreichend feine Einstellung des Volumenstroms bei wesentlich vereinfachtem Aufbau. Hierdurch sind Herstellung, Montage und Wartung in vorteilhafter Weise vereinfacht und die Lebensdauer des Systems insgesamt verbessert.

Gemäß einem besonders bevorzugten Merkmal der Erfindung wird das System als Begasungssystem, vorzugsweise Belüftungssystem, für einen Raum verwendet. Es ist in diesem Fall dazu ausgebildet, als Fluid ein Gas oder Gasgemisch, vorzugsweise ein Schutzgas oder Luft, zu führen. Übliche Betriebsdrücke von solchen Systemen liegen im Bereich zwischen 5 und 150 Pa (Pascal). Durch den erfindungsgemäßen Rohreinsatz sind im Belüftungssystem in diesem Druckbereich Volumenströme von 5 bis 100 m³/h, vorzugsweise von 10 bis 70 m³/h stufenweise einstellbar. Die Verbindungskanäle sind dabei mit einem derartigen Strömungsquerschnitt ausgebildet, dass der Volumenstrom in Stufen bis zu 1 m³/h, vorzugsweise von 2 bis 10 m³/h, eingestellt werden kann.

Die Erfindung wird nachfolgend am Beispiel von zwei nicht beschränkend auszulegenden Ausführungsbeispielen erläutert. Dabei zeigen
- Fig. 1: ein erstes Ausführungsbeispiel in schematischer Schnittdarstellung mit vollständig geöffneten Verbindungskanälen;
- Fig. 2: das erste Ausführungsbeispiel gemäß Fig. 1 mit zum Teil verschlossenen Verbindungskanälen nach der Erfindung;
- Fig. 3: ein zweites Ausführungsbeispiel in schematischer Schnittdarstellung mit vollständig geöffneten Verbindungskanälen;
- Fig. 4: das zweite Ausführungsbeispiel gemäß Fig. 3 mit zum Teil verschlossenen Verbindungskanälen;

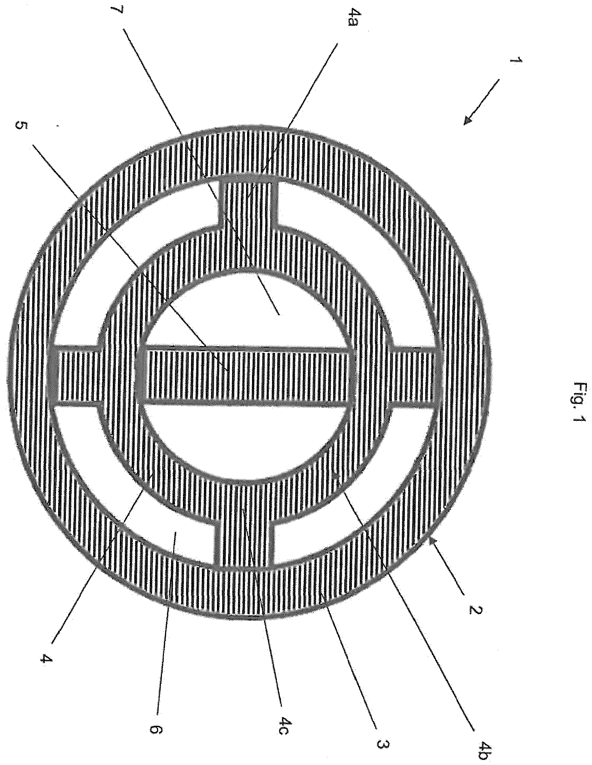

Figur 1 zeigt einen Rohreinsatz 1 gemäß einer ersten Ausführungsform.

Der Rohreinsatz 1 verfügt über einen Grundkörper 2. Der Grundkörper 2 ist vorliegend mehrteilig, insbesondere dreiteilig, ausgebildet. Er ist dabei modular aufgebaut. Zu diesem Zweck besteht er aus drei Modulen 3, 4 und 5. Das erste Modul 3 ist hohlzylindrisch ausgebildet. Es weist daher einen ringförmigen Querschnitt auf. Das zweite Modul 4 ist ebenfalls hohlzylindrisch ausgebildet und weist einen ringförmigen Querschnitt auf. Der ringförmige Querschnitt des zweiten Moduls 4 ist durch vier Stege 4a unterbrochen. Die Stege 4a unterteilen ringförmigen Querschnitt des zweiten Moduls dabei in vier Ringsegmente 4b Der Außendurchmesser der Ringsegmente 4b des zweiten Moduls 4 ist dabei geringer als der Innendurchmesser des ersten Moduls 3. Die Stege 4a sind radial äquidistant voneinander beabstandet angeordnet und erstrecken sich ausgehend von der Ringfläche 4c des zweiten Moduls 4 in Richtung des ersten Moduls 3. Die Stege 4a stehen dabei jeweils einendseitig in unmittelbarem Kontakt mit der Innenwand des ersten Moduls 3. Das erste Modul 3 ist hierdurch mit dem zweiten Modul 4 durch einfaches Einstecken des zweiten Moduls 4 in das erste Modul 1 verbunden.

Ferner verfügt der Grundkörper über ein drittes Modul 5. Das Modul 5 ist als quaderförmiges Stabilisierungselement ausgebildet. Es verfügt über einen rechteckigen, balkenförmigen Querschnitt. Das dritte Modul 5 steht beidendseitig mit der Innenwand des zweiten Moduls 4 in unmittelbarem Kontakt. Bei der Ausbildung des Grundkörpers wird es in einfacher Weise in das zweite Modul 4 eingesteckt.

Der Grundkörper 2 verfügt vorliegend über vier erste Verbindungskanäle 6, die einen Querschnitt in Form eines Ringsegments aufweisen. Die ersten Verbindungskanäle 6 sind zwischen dem ersten Modul 3 und dem zweiten Modul 4 ausgebildet. Im Detail ist jeder erste Verbindungskanal 6 von einem zwei Stegen 4a, einem Ringsegment 4b und einem Teil des ersten Moduls 3 begrenzt.

Der Grundkörper 2 verfügt ferner über zwei zweite Verbindungskanäle 7 mit halbkreisförmigem Querschnitt. Die zweiten Verbindungskanäle 7 sind zwischen dem zweiten Modul 4 und dem dritten Modul 5 ausgebildet. Zu diesem Zweck unterteilt das dritte Modul 5 den kreisförmigen Innenraum des hohlzylindrischen zweiten Moduls 4 in zwei halbkreisförmige Verbindungskanäle.

Die Module 3, 4 und 5 bilden dabei in synergetischer Kombination einen formstabilen Grundkörper 2 und die Verbindungskanäle 5 und 6 aus. Diese modulare Ausgestaltung des Grundkörpers bringt große fertigungstechnische Vorteile, da die einzelnen Module aufgrund ihres einfachen Aufbaus wesentlich leichter hergestellt werden können, als der Grundkörper insgesamt.

Alle Module 3, 4, 5 und damit der Grundkörper insgesamt sind aus einem PUR-Schaum gebildet. Der PUR-Schaum ist dabei wahlweise offenzellig oder geschlossenzellig ausgebildet. Der Grundkörper weist vorliegend unter Berücksichtigung der üblichen Toleranzen einen Außendurchmesser von ca. 80 mm und eine Kanallänge von ca. 40 mm auf. Er ist damit in Kombination mit seiner flexiblen Ausgestaltung für verschiedene Rohrdurchmesser verwendbar.

Die Öffnungen der ersten und zweiten Verbindungskanäle 6, 7 sind in Form eines gleichmäßigen Musters über die Oberfläche des Grundkörpers 2 verteilt angeordnet. Hierdurch wird insbesondere das Strömungsverhalten eines nicht gezeigten Fluid in einem nicht gezeigten Rohr verbessert, so dass die Verwendung eines nicht-regelbaren Tellerventils in synergetischer Verbindung mit dem Rohreinsatz 1 ermöglicht wird.

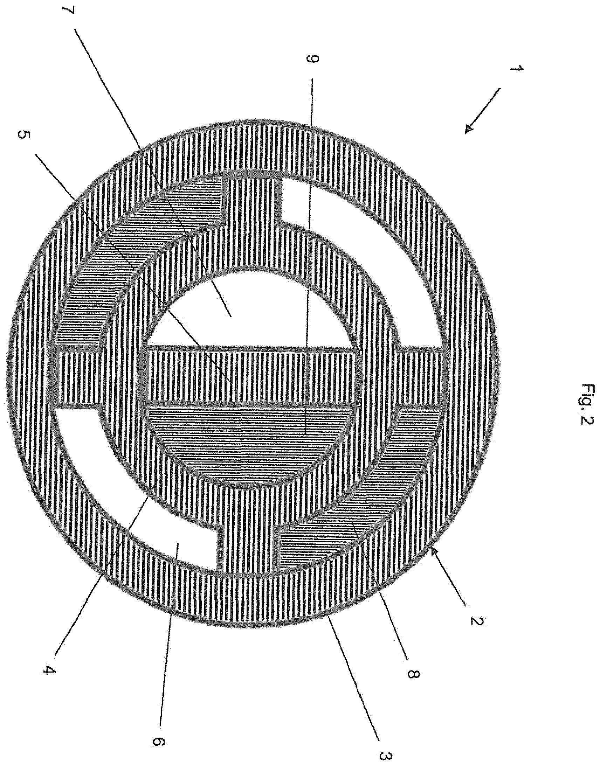

In Figur 1 sind alle Verbindungskanäle 6, 7 unverschlossen dargestellt. Figur 2 zeigt einen Rohreinsatz 1 gemäß Figur 1, bei dem ein Teil der ersten und zweiten Verbindungskanäle 6, 7 erfindungsgemäß verschlossen sind.

Vorliegend sind zwei erste Verbindungskanäle 6 jeweils mittels eines ersten Verschlusselements 8 verschlossen. Das erste Verschlusselement 8 ist ebenso wie die Module 3, 4, 5 des Grundkörpers wahlweise aus einem offenzelligen PUR-Schaum gebildet. Seine Querschnittsform ist mit der Querschnittsform des ersten Verbindungskanals korrespondierend ausgebildet. Im Ergebnis weist das erste Verschlusselement 8 damit im Querschnitt die Form eines Ringsegments auf. Das erste Verschlusselement 8 ist in den ersten Verbindungskanal 6 eingesteckt. Die Außenwand des ersten Verschlusselements 8 steht dabei mit der Innenwand des ersten Verbindungskanals 6 in unmittelbarem Kontakt und verschließt diesen dadurch fluiddicht.

Im Beispiel nach Figur 2 ist ferner einer der beiden zweiten Verbindungskanäle 7 mit einem zweiten Verschlusselement 9 verschlossen. Das zweite Verschlusselement 9 ist ebenso wie die Module 3, 4, 5 des Grundkörpers aus PUR-Schaum gebildet. Seine Querschnittsform ist mit der Querschnittsform des zweiten Verbindungskanals 7 korrespondierend ausgebildet. im Ergebnis weist das zweite Verschlusselement 9 damit im Querschnitt die Form eines Halbkreises auf. Das zweite Verschlusselement 9 ist in den zweiten Verbindungskanal 7 eingesteckt. Die Außenwand des zweiten Verschlusselements 9 steht dabei mit der Innenwand des zweiten Verbindungskanals 7 in unmittelbarem Kontakt und verschließt diesen dadurch bündig.

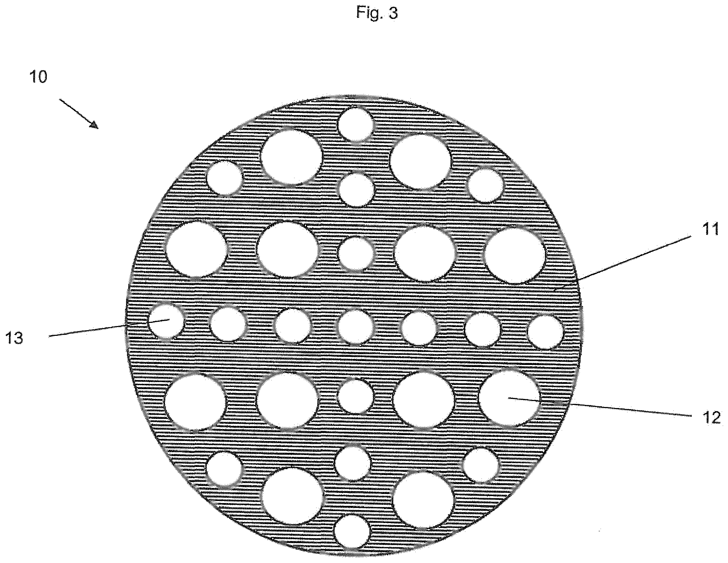

Figur 3 zeigt eine zweite Ausführungsform. Dargestellt ist ein Rohreinsatz 10 mit einem Grundkörper 11.

Der Grundkörper 11 ist vorliegend einstückig ausgebildet und damit besonders formstabil.

Der Grundkörper 11 ist aus einem PUR-Schaum gebildet. Der PUR-Schaum ist dabei wahlweise offenzellig oder geschlossenzellig ausgebildet.

Der Grundkörper weist vorliegend unter Berücksichtigung der üblichen Toleranzen einen Außendurchmesser von ca. 130 mm und eine Kanallänge von ca. 30 mm auf. Er ist damit in Kombination mit seiner flexiblen Ausgestaltung für verschiedene Rohrdurchmesser verwendbar.

Der Grundkörper 11 stellt erste und zweite Verbindungskanäle 12, 13 bereit. Die ersten Verbindungskanäle 12 weisen im Querschnitt einen größeren Innendurchmesser auf, als die zweiten Verbindungskanäle 13. Die ersten und zweiten Verbindungskanäle 12, 13 sind vorliegend mit kreisförmigem Querschnitt ausgebildet. Bestimmungsgemäß sind lediglich die ersten Verbindungskanäle 12 im vorliegenden Fall mittels eines geeigneten Verschlusselements verschließbar.

Die Öffnungen der ersten und zweiten Verbindungskanäle 12, 13 sind in Form eines gleichmäßigen Musters über die Oberfläche des Grundkörpers 11 verteilt angeordnet. Hierdurch wird insbesondere das Strömungsverhalten eines nicht gezeigten Fluid in einem nicht gezeigten Rohr verbessert, so dass die Verwendung eines nicht-regelbaren Tellerventils in synergetischer Verbindung mit dem Rohreinsatz 10 ermöglicht wird.

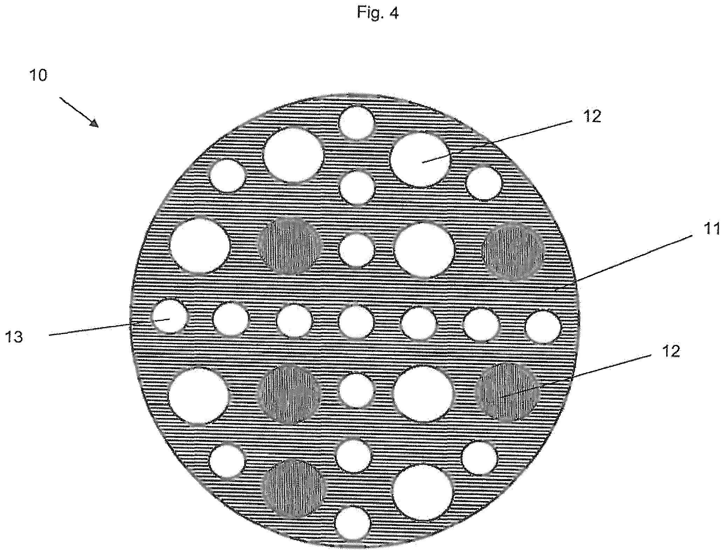

Figur 4 zeigt den Rohreinsatz 10 gemäß Figur 3 mit dem Grundkörper 11, bei dem ein Teil der ersten Verbindungskanäle 12 mit einem Verschlusselement 14 fluiddicht verschlossen ist.

Das Verschlusselement 14 ist ebenso wie der Grundkörper wahlweise aus offenzelligem oder geschlossenzelligem PUR-Schaum gebildet. Seine Querschnittsform ist mit der Querschnittsform des ersten Verbindungskanals 12 korrespondierend ausgebildet. Im Ergebnis weist das Verschlusselement 14 damit im Querschnitt die Form eines Kreises auf. Das Verschlusselement 14 ist in den ersten Verbindungskanal 12 eingesteckt. Die Außenwand des Verschlusselements 14 steht dabei mit der Innenwand des ersten Verbindungskanals 12 in unmittelbarem Kontakt und verschließt diesen dadurch bündig.

Die zweiten Verbindungskanäle 13 sind im vorliegenden Beispiel vollständig unverschlossen.

Beide gezeigten Ausführungsbeispiele eigenen sich dem Grunde nach für die Anordnung in jedem erfindungsgemäßen System zur Zuführung oder Abführung eines Fluids. Insbesondere sind sie jedoch geeignet und bestimmt für die Verwendung als Teil eines Belüftungssystems.

### Bezugszeichenliste

- 1: Rohreinsatz
- 2: Grundkörper
- 3: erstes Modul
- 4: zweites Modul
- 4a: Steg
- 4b: Ringsegment
- 4c: Ringfläche
- 5: drittes Modul
- 6: erster Verbindungskanal
- 7: zweiter Verbindungskanal
- 8: erstes Verschlusselement
- 9: zweites Verschlusselement
- 10: Rohreinsatz
- 11: Grundkörper
- 12: erster Verbindungskanal
- 13: zweiter Verbindungskanal
- 14: Verschlusselement

## Patentansprüche

1. Rohreinsatz (1) zur Anordnung in einem Rohr für die Einstellung des Volumenstroms eines innerhalb des Rohrs geführten Fluids, aufweisend einen Grundkörper (2) und wenigstens ein Verschlusselement (8, 9), wobei der Grundkörper (2) eine Mehrzahl von Verbindungskanälen (6, 7, 12, 13)aufweist und wobei das wenigstens eine Verschlusselement (8, 9) in einen der Verbindungskanäle (6, 7, 12, 13) einsetzbar ist,
**dadurch gekennzeichnet, dass**
das Verschlusselement (8, 9) aus einem fluiddurchlässigen Material gebildet ist,
wobei
ein Teil der Verbindungskanäle unverschlossen ist und
ein Teil der Verbindungskanäle mit dem wenigstens einen Verschlusselement verschlossen ist.

2. Rohreinsatz (1) gemäß Anspruch 1, **dadurch gekennzeichnet, dass** der Grundkörper (2) aus einem fluiddichten oder einem fluiddurchlässigen Material gebildet ist.

3. Rohreinsatz (1) gemäß Anspruch 1 oder 2, **gekennzeichnet durch** eine Mehrzahl von Verschlusselementen (8, 9).

4. Rohreinsatz (1) gemäß einem der vorherigen Ansprüche, **dadurch gekennzeichnet, dass** der Grundkörper (2) zur Ausbildung der Verbindungskanäle (6, 7, 12, 13) modular aufgebaut ist.

5. Rohreinsatz (1) gemäß Anspruch 4, **dadurch gekennzeichnet, dass** der Grundkörper (2) aus wenigstens zwei Modulen gebildet ist, die mittels einer Steckverbindung miteinander verbindbar sind.

6. Rohreinsatz (1) gemäß Anspruch 5, **dadurch gekennzeichnet, dass** wenigstens eines der wenigstens zwei Module einen ringförmigen Querschnitt aufweist.

7. Rohreinsatz (1) gemäß einem der vorherigen Ansprüche, **dadurch gekennzeichnet, dass** die einzelnen Verbindungskanäle (6, 7, 12, 13) mit unterschiedlichem Querschnitt ausgebildet sind.

8. Rohreinsatz (1) gemäß Anspruch 7, **dadurch gekennzeichnet, dass** wenigstens einer der wenigstens zwei Verbindungskanäle (12, 13) mit kreisförmigem oder ringförmigem Querschnitt ausgebildet ist.

9. System zur Zuführung oder Abführung eines Fluids, vorzugsweise zur Belüftung eines Raumes, aufweisend ein Rohr und einen innerhalb des Rohres angeordneten Rohreinsatz (1) gemäß einem der Ansprüche 1 bis 8.

10. System gemäß Anspruch 9, **gekennzeichnet durch** ein Ventil, welches einendseitig des Rohres angeordnet ist.

11. System gemäß Anspruch 10, **dadurch gekennzeichnet, dass** das Ventil ein Tellerventil ist.

12. System gemäß einem der Ansprüche 9-11, **dadurch gekennzeichnet, dass** der Volumenstrom des Fluids im Rohr mittels des Rohreinsatzes (1) in Abhängigkeit eines Betriebsdrucks des Fluids stufenweise einstellbar ist.

13. System gemäß Anspruch 12, **dadurch gekennzeichnet, dass** im Druckbereich von 5 bis 150 Pa Volumenströme von 5 bis 100 m³/h stufenweise einstellbar sind.

## Claims

1. Pipe insert (1) for arrangement in a pipe for setting the volumetric flow rate of a fluid conducted within the pipe, comprising a base body (2) and at least one closure element (8, 9), wherein the base body (2) comprises a plurality of connecting channels (6, 7, 12, 13), and wherein the at least one closure element (8, 9) can be inserted into one of the connecting channels (6, 7, 12, 13), **characterized in that** the closure element (8, 9) is formed from a fluid-permeable material, wherein a portion of the connecting channels are not closed off and a portion of the connecting channels are closed off by the at least one closure element.

2. Pipe insert (1) according to Claim 1, **characterized in that** the base body (2) is formed from a fluid-tight material or a fluid-permeable material.

3. Pipe insert (1) according to Claim 1 or 2, **characterized by** a plurality of closure elements (8, 9) .

4. Pipe insert (1) according to any one of the preceding claims, **characterized in that**, for forming the connecting channels (6, 7, 12, 13), the base body (2) is modularly constructed.

5. Pipe insert (1) according to Claim 4, **characterized in that** the base body (2) is formed from at least two modules, which can be connected to one another by means of a plug-in connection.

6. Pipe insert (1) according to Claim 5, **characterized in that** at least one of the at least two modules comprises an annular cross section.

7. Pipe insert (1) according to any one of the preceding claims, **characterized in that** the individual connecting channels (6, 7, 12, 13) are formed with a different cross section.

8. Pipe insert (1) according to Claim 7, **characterized in that** at least one of the at least two connecting channels (12, 13) is formed with a circular or annular cross section.

9. System for feeding or discharging a fluid, preferably for ventilating a room, comprising a pipe and a pipe insert (1) according to any one of Claims 1 to 8 which is arranged within the pipe.

10. System according to Claim 9, **characterized by** a valve which is arranged at one end of the pipe.

11. System according to Claim 10, **characterized in that** the valve is a disc valve.

12. System according to any one of Claims 9-11, **characterized in that** the volumetric flow rate of the fluid in the pipe can in a stepwise manner be set in a manner dependent on an operating pressure of the fluid by means of the pipe insert (1) , ,.

13. System according to Claim 12, **characterized in that**, in the pressure range of 5 to 150 Pa, volumetric flow rates of 5 to 100 m³/h can be set in a stepwise manner.

## Revendications

1. Insert de tube (1) destiné à être agencé dans un tube pour ajuster le débit volumique d'un fluide acheminé à l'intérieur du tube, comprenant un corps de base (2) et au moins un élément de fermeture (8, 9), le corps de base (2) présentant une pluralité de canaux de connexion (6, 7, 12, 13) et l'au moins un élément de fermeture (8, 9) pouvant être inséré dans l'un des canaux de connexion (6, 7, 12, 13), **caractérisé en ce que**
l'élément de fermeture (8, 9) est formé d'un matériau perméable aux fluides, une partie des canaux de connexion n'étant pas fermée et une partie des canaux de connexion étant fermée avec l'au moins un élément de fermeture.

2. Insert de tube (1) selon la revendication 1, **caractérisé en ce que** le corps de base (2) est formé d'un matériau étanche aux fluides ou d'un matériau perméable aux fluides.

3. Insert de tube (1) selon la revendication 1 ou 2, **caractérisé par** une pluralité d'éléments de fermeture (8, 9) .

4. Insert de tube (1) selon l'une quelconque des revendications précédentes, **caractérisé en ce que** le corps de base (2) est construit sous forme modulaire pour former les canaux de connexion (6, 7, 12, 13).

5. Insert de tube (1) selon la revendication 4, **caractérisé en ce que** le corps de base (2) est formé d'au moins deux modules qui peuvent être reliés entre eux au moyen d'une connexion enfichable.

6. Insert de tube (1) selon la revendication 5, **caractérisé en ce qu'**au moins l'un des au moins deux modules présente une section transversale annulaire.

7. Insert de tube (1) selon l'une quelconque des revendications précédentes, **caractérisé en ce que** les canaux de connexion individuels (6, 7, 12, 13) sont configurés avec une section transversale différente.

8. Insert de tube (1) selon la revendication 7, **caractérisé en ce qu'**au moins l'un des au moins deux canaux de connexion (12, 13) est configuré avec une section transversale circulaire ou annulaire.

9. Système d'alimentation ou d'évacuation d'un fluide, de préférence pour la ventilation d'une pièce, présentant un tube et un insert de tube (1) selon l'une quelconque des revendications 1 à 8 agencé à l'intérieur du tube.

10. Système selon la revendication 9, **caractérisé par** une soupape, qui est agencée à l'une des extrémités du tube.

11. Système selon la revendication 10, **caractérisé en ce que** la soupape est une soupape à disque.

12. Système selon l'une quelconque des revendications 9 à 11, **caractérisé en ce que** le débit volumique du fluide dans le tube est ajustable par étapes au moyen de l'insert de tube (1) en fonction d'une pression de service du fluide.

13. Système selon la revendication 12, **caractérisé en ce que**, dans la plage de pressions allant de 5 à 150 Pa, des débits volumiques de 5 à 100 m³/h sont ajustables par étapes.
